# EUROPEAN PATENT SPECIFICATION

(11) **EP 2 314 414 B1**
(45) Date of publication and mention of the grant of the patent: **13.01.2016**
(21) Application number: 10013585.4
(22) Date of filing: 13.10.2010
(51) Int. Cl.: B23Q 7/10, B65G 1/14

(54) **A magazine for the temporary storage of workpieces**
Magazin zur vorübergehenden Lagerung von Werkstücken
Magasin pour le stockage temporaire de pièces a usiner

(30) Priority: 14.10.2009 BE 200900628
(43) Date of publication of application: 27.04.2011
(73) Proprietor: ROBOJOB, besloten vennootschap met beperkte aansprakelijkheid, 2220 Heist-op-den-Berg (BE)
(72) Inventor: De Roovere, Helmut, 3140 Keerbergen (BE); De Ceuster, Luc Marcel Joseph, 2230 Herselt (BE)
(74) Representative: Donné, Eddy

(56) References cited:
- DE-A1- 3 630 061
- DE-A1- 3 733 317
- DE-C1- 3 444 320
- US-A- 2 649 207
- US-A1- 2003 132 178

## Description

The present invention relates to a magazine for the temporary storage of workpieces, more specifically for the temporary storage of these workpieces for supply and/or removal by a robot.

Such magazines are common for workpieces that have to undergo a certain process or machining by a tool, where a robot is often used to supply the workpieces to be processed from the magazine.

Similarly such magazines are also used for the removal of processed workpieces by the same or another robot.

Such magazines are already known in the form of a grid plate onto which the workpieces are placed at the nodes of a fixed grid arranged beforehand, where the coordinates of the nodes are known by the robot control that has to supply or remove the workpieces.

Such a robot is generally equipped with a gripper with radially movable claws with which the workpieces can be held at the top around their circumference.

The grid plate is used for workpieces with different dimensions, for example disk-shaped workpieces with different diameters. For this reason the nodes of the grid must be sufficiently far apart in order to allow enough room to position workpieces of a larger diameter so that there is sufficient space between them to position the claws on the grid.

This means that the available storage area of the grid is not fully utilised for workpieces with a smaller diameter, and consequently such a magazine will take up a relatively large storage space that is determined by the workpieces with the largest dimensions and this storage space is thus not fully utilised with smaller workpieces.

Moreover, the number of workpieces to be held is determined by the number of nodes, which is fixed, such that smaller or larger series of workpieces to be handled cannot be dealt with very efficiently.

This is generally solved by exchanging the grid plate and thus different grid plates are needed for efficient space utilisation.

Moreover, the workpieces are supplied manually and it generally takes a lot of time to put the workpieces in the right position for which the coordinates are known by the robot control.

In addition, the workpieces are loose on the grid plate such that there is a risk that these workpieces can be accidentally moved with respect to the position known by the robot, such that errors can occur and the workpieces and the robot can be damaged.

Such magazines can also have pegs between which the workpieces are positioned or clasped on the grid.

The disadvantage of this is that the workpieces may be damaged by the clasping force of the pegs, which is always detrimental to the dimensional stability of the finished workpieces.

In addition, additional mechanics and extra setup time are required to set up the pegs centrically around the workpiece diameter in question.

Other magazines are known in which every workpiece is held on to a table by a bracket, which makes such magazines complex and expensive.

Other types of magazines are also known (US 2003/0132178) in the form of a sloping channel with an end wall at the lowest end. The workpieces are stacked in the channel in a continuous row and thereby slide downwards to the lowest workpiece held against the end wall. The lowest workpieces resting against the end wall are pushed upwards out of the channel from underneath one by one by a peg through an opening in the channel to be further processed. Each time, the other workpieces slide further downwards and the next lowest workpiece is then pushed upwards out of the channel according to a recurring cycle.

A disadvantage is that the width of the channel must be adapted to the width of the workpieces to be handled. Therefore this type of magazine is mainly used in production lines for handling large series of identical workpieces, as such magazines cannot be easily adjusted to handle smaller series of workpieces with different dimensions.

Another disadvantage is that the workpieces can only be stacked in one layer.

Another disadvantage is that such a magazine is not suitable for handling workpieces that can be stacked into one another, which is indeed a disadvantage of many other types of magazines.

The purpose of the present invention is to provide a simple solution to at least one of the aforementioned and other disadvantages.

To this end the invention relates to a magazine according to claim 1 and to a method according to claim 17.

An advantage of a magazine according to the invention is that the workpieces can be positioned in the positions known by the robot without much effort by an operator, as, due to the sloping position of the table in the direction of the supports, the operator will almost instinctively place the workpieces in the direction of the supports and these supports are of such a nature that the workpieces are automatically aligned to the positions known by the robot by this movement.

Therefore, mistakes in the positioning of the workpieces at the positions known by the robot or accidental movements after positioning the workpieces are as good as ruled out.

Because the supports can be moved in the XY plane of the sloping table according to the shape and dimensions of the workpieces to be handled, the supports can be positioned such that the available area of the table is utilised to a maximum, and a larger number of workpieces of a small size can be held than is the case for workpieces of a larger size.

This thus enables a flexible response to small series of workpieces with mutually different dimensions.

Because the workpieces are at a distance from one another, there is sufficient space around the workpieces for a robot gripper or other tool to pick up the workpieces.

Preferably the angle of incline of the table is such that the workpieces only slide on the table in the direction of the supports under the influence of their own weight, such that the correct positioning of the workpieces against the supports is even easier.

According to a practical embodiment, the table has a pattern of holes and the supports are formed by pegs that extend through the holes of the hole pattern, whereby a length of these pegs protrudes above the table, and whereby these pegs are placed in the holes or left out of the holes according to the chosen positioning pattern, in positions with discrete distances between them that are selected according to the shape and dimensions of the workpieces to be held.

In this way it is easy to switch from one positioning pattern to another positioning pattern by simply moving or taking out pegs, or affixing extra ones, in order to utilise the space of the table to a maximum.

All pegs can also be placed at the bottom of the holder such that they do not protrude, and can then be driven up so that they protrude above the table according to the workpiece dimensions.

The workpieces can preferably be stacked on one another in a number of levels, whereby the preference is that the length by which the pegs protrude above the table is adjustable.

The pegs can thereby be adjusted with respect to the stack height, which can be realised in practice by positioning the table in the direction perpendicular to the table.

It is thereby possible to adjust the length between the top of the pegs and the top of the table to the height of the stack, and this length is preferably set such that the topmost workpieces of the stacks protrude above the pegs by a certain height, such that the topmost workpieces are clear over this height and consequently can be picked up without hindrance by a robot gripper or other tool.

As the workpieces are taken from the top, it is also possible to stack workpieces on top of one another that are partly stackable into one another.

According to the most preferable embodiment the pegs are mounted in a holder, that is placed under the table, in a way that they can be removed or extended, and the table can be moved with respect to the holder in a perpendicular direction to the top surface of the table, such that the length by which the pegs protrude above the table is variable according to the height of the stacks of the workpieces.

To better demonstrate the characteristics of the invention, a few preferred embodiments are described below, as an example without any limiting nature, of a magazine according to the invention, with reference to the accompanying drawings, in which:
Figure 1 shows schematically and in perspective an empty magazine according to the invention.
Figure 2 gives a side view according to the arrow F2 in figure 1.
Figure 3 gives a view as in figure 1, but where there is a layer of workpieces in the magazine.
Figure 4 and figure 5 show a top view and side view respectively according to the arrows F4 and F5 in figure 3.
Figure 6 gives the same view as in figure 5, but during use.
Figure 7 gives a view as in figure 3, but with workpieces of different dimensions.
Figure 8 gives a view as in figure 6, but where there are a number of layers of workpieces stacked on top of one another in the magazine.
Figure 9 gives a view as in figure 8 during the further use of the magazine with workpieces.
Figure 10 gives a top view as in figure 4, but with workpieces of a different shape and dimensions.
Figure 11 shows a cross-section according to the line XI-XI in figure 10.
Figure 12 shows a variant of a magazine according to the invention.

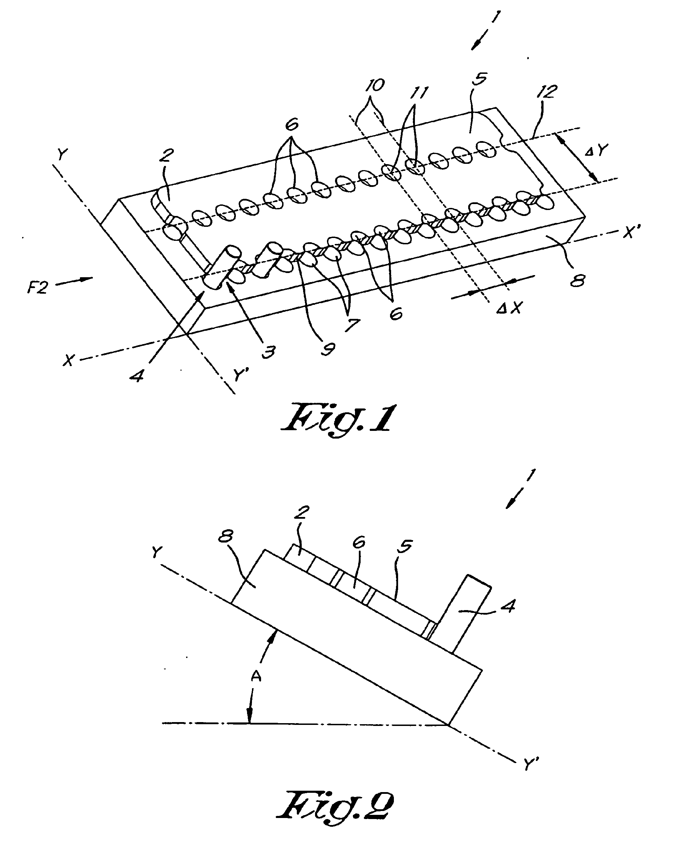

The magazine 1 according to the invention in figures 1 and 2 is primarily formed by a table 2 and by movable supports 3 that are formed in the example shown by pegs 4 that protrude above the table 2 by a certain length L and are oriented perpendicularly to the top surface 5 of the table 2.

In the example shown, the pegs 4 extend out through holes 6 in the table 2 and these pegs 4 are held by their lowest end in notches or holes 7 of a plate-shaped holder 8 that is placed under the table 2 and these pegs are removable.

The table 2 and the holder 8 are parallel to one another and are both sloping with an angle of incline A with respect to the horizontal direction, whereby the table 2 slopes down in the direction Y-Y' of the pegs 4, in particular in the case of figure 1 it slopes down in the direction of a long edge 9 of the table 2, and this edge 9 extends in the direction X-X' perpendicular to the aforementioned direction Y-Y'.

The holes 6 and holes 7 respectively in the table 2 and the holder 8 are aligned to a hole pattern that is the same in both cases, and which, in the example shown, is a grid pattern 10 with nodes 11 that are located on parallel lines 12 that extend in the X-X' direction, whereby the nodes 11 are at a distance ΔX from one another in the X-X' direction, and the lines 12 are located in the Y-Y' direction at a distance ΔY from one another.

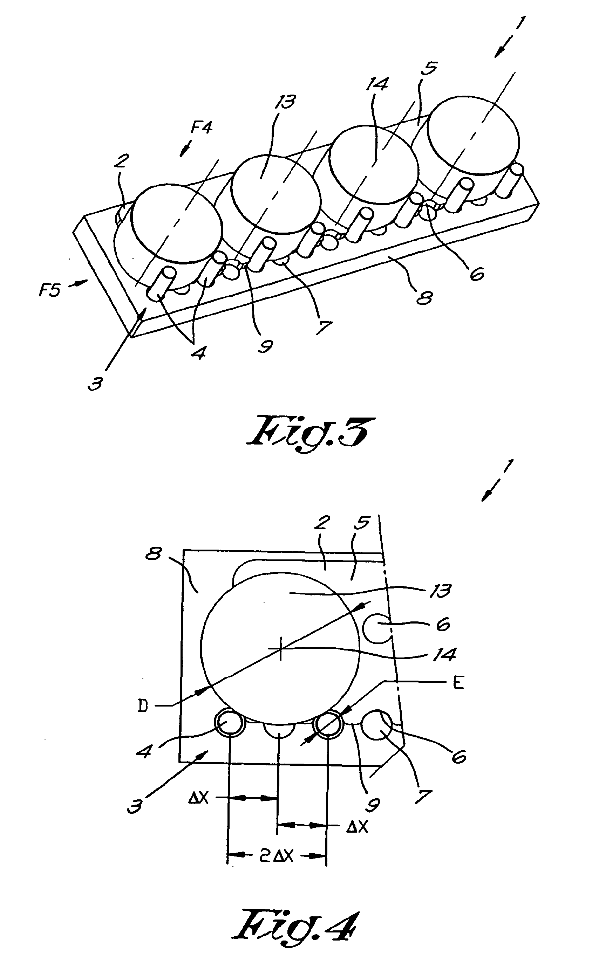

The use of a magazine according to the invention for temporarily storing workpieces 13 at a distance from one another is simple and is illustrated by figures 3 to 5.

The pegs 4 are inserted beforehand through the holes 6 in the table 2 according to a certain pattern and secured in the holes 7 of the holder 8.

The chosen hole pattern is a function of the shape and dimensions of the workpieces 13, which in this case are round disks with a diameter D that is larger than the double distance 2.ΔX but smaller than the triple distance 3.Δx.

In this case the pegs 4 are fitted in the holes 6 and 7 along the bottom line 12 of the grid 10, whereby a hole 6 is kept open between two successive pegs 4 every time, such that the pegs 4 are at the double distance 2.ΔX from one another.

As shown in figures 3 to 5, the workpieces 13 are placed on the table 2 by an operator and slid downwards in the Y-Y' direction against the pegs 4.

Due to the angle of incline A of the table 2 this action is done almost intuitively by the operator. The angle of incline A can be such that the workpieces 13 automatically slide on the table 2 in the direction of the pegs 4 by their own weight.

Due to the fact that the pegs 4 are at a distance 2.ΔX from one another they form supports 3 that are such that the workpieces 13 automatically align themselves, in a downwards movement, to known positions that can be passed on to a robot.

In case of the disk-shaped workpieces 13 of figure 3, for each workpiece 13 a support 3 is formed by two pegs 4 that keep the workpiece 13 concerned in place at an aforementioned position known by the robot and prevent unwanted sliding of the workpiece.

The aforementioned known positions are for example determined by the position of the midpoint 14 of each workpiece 13, whereby this position can be easily calculated geometrically from the distance 2.ΔX between the two pegs 4 and the diameter D of the workpieces 13 and the diameter E of the pegs 4.

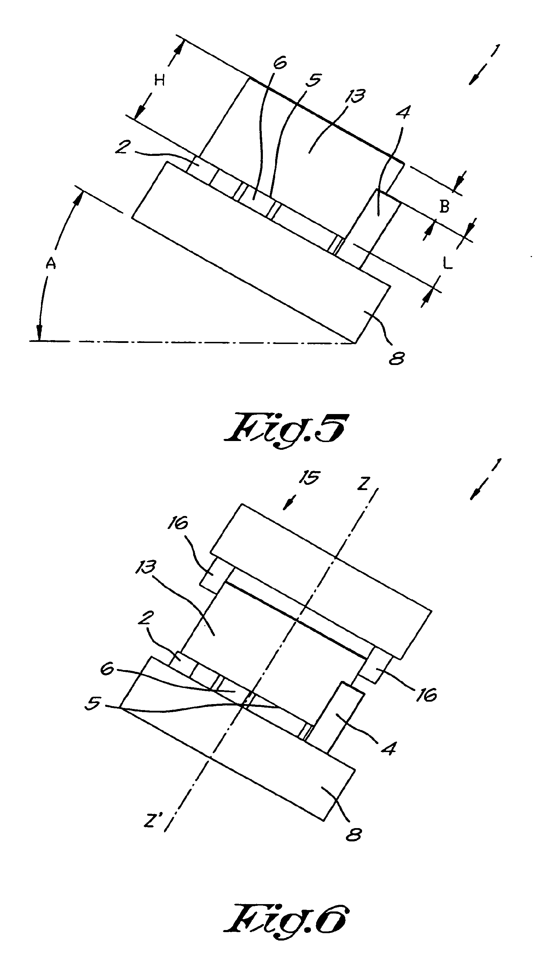

The calculated positions can be passed on to the robot control, which can then take the workpieces out of the magazine one by one, or put them in it or put them back, for example by means of a gripper 15 with fingers 16 with which a workpiece 13 can be held around the circumference as shown in figure 6, and can be moved in the Z-Z' direction perpendicular to the top surface 5 of the table 2, as shown in figure 6.

To this end, it is desirable that the length L with which the pegs 4 protrude above the table 2 is less than the height H of the workpieces 13, such that the workpieces 13 protrude over a certain height B above the pegs 4 and are thus clear at the top to be clasped without hindrance by the gripper 15.

Optionally software can be provided to determine the position of the workpieces 13 concerned, on the basis of the shape and dimensions of the workpieces 13 to be held and the position pattern of the pegs 4 or supports 3, in order to enter this position into the robot control.

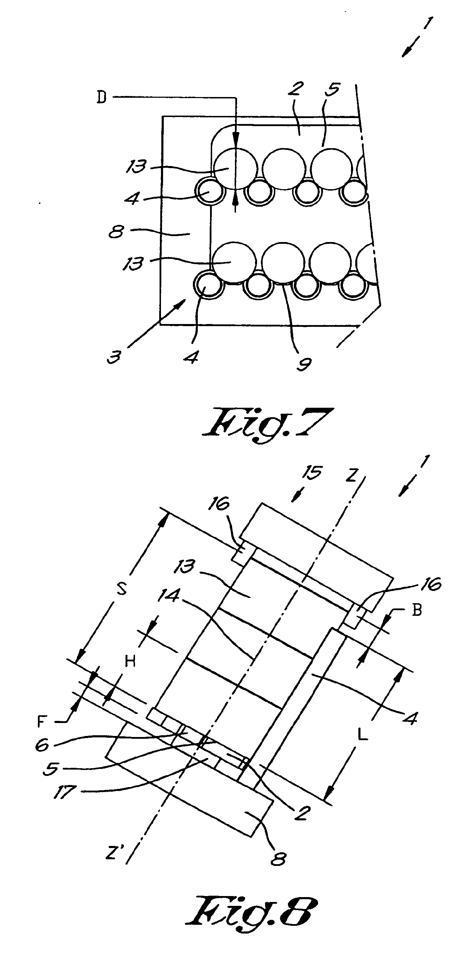

Figure 7 shows an alternative configuration for storing the workpieces 13 in the shape of round disks with a smaller diameter D, in particular a diameter D that is less than the distance ΔX between the holes 6.

In this case the pegs 4 are placed according to a pattern in which a peg is placed in all holes 6 and 7, such that a larger number of workpieces 13 can be held on the table 2 than in the case of the previous configuration, and the available space on the table 2 is thus utilised to a maximum.

Figure 8 shows an alternative magazine 1 according to the invention, in which a number of workpieces can be stacked on top of one another in a number of levels.

In this case the pegs 4 are longer, whereby the length L by which the pegs 4 protrude above the table is adjustable according to the stacked height of the workpieces.

The distance F between the table 2 and the holder 8 is thereby adjustable with a drive 17 for moving the holder 8 and/or the table 2 in the Z-Z' direction perpendicular to the top surface 5 of the table 2.

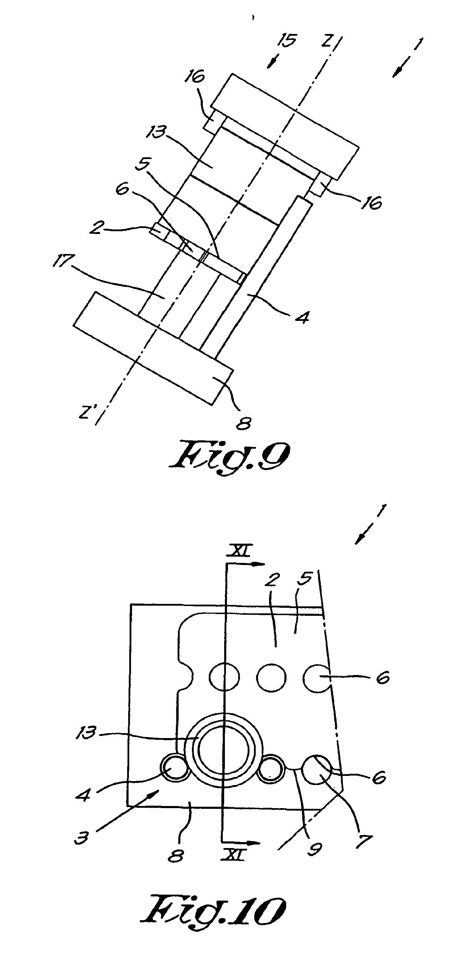

The use of this magazine 1 is simple and is illustrated in figures 8 and 9.

Figure 8 shows the starting situation where the workpieces 13 are stacked on one another against the pegs 4 in three layers.

The length L by which the pegs 4 protrude above the table 2 is set such that this length L is less than the total stack height S of the workpieces 13, such that the top workpiece 13 protrudes over a certain height B above the pegs 4.

The workpieces 13 of the top layer of workpieces 13 are taken away one by one by the robot gripper 15 in a way as already set out above in figures 1 to 6 for a magazine 1 with only one single layer of workpieces 13.

When the top layer has been removed, the table 2 is moved upwards, for example, in the direction Z-Z' with respect to the holder 8, and this over a distance that is equal to the height H of the workpieces 13.

As a result the next layer of workpieces 13 is now in the position as illustrated in figure 9, whereby the workpieces 13 protrude above the pegs 4 by a height B in a position that is known by the robot and from where the robot gripper 15 can pick up the workpieces 13.

The holes 6 in the table 2 can form a slide guide for the pegs 4 when the table 2 and/or the holder 8 moves to which end the diameter E of the pegs 4 preferably almost matches the diameter of these holes 6.

The aforementioned drive 17 can be made controllable to synchronise the movements of the drive 17 with the movements of the robot.

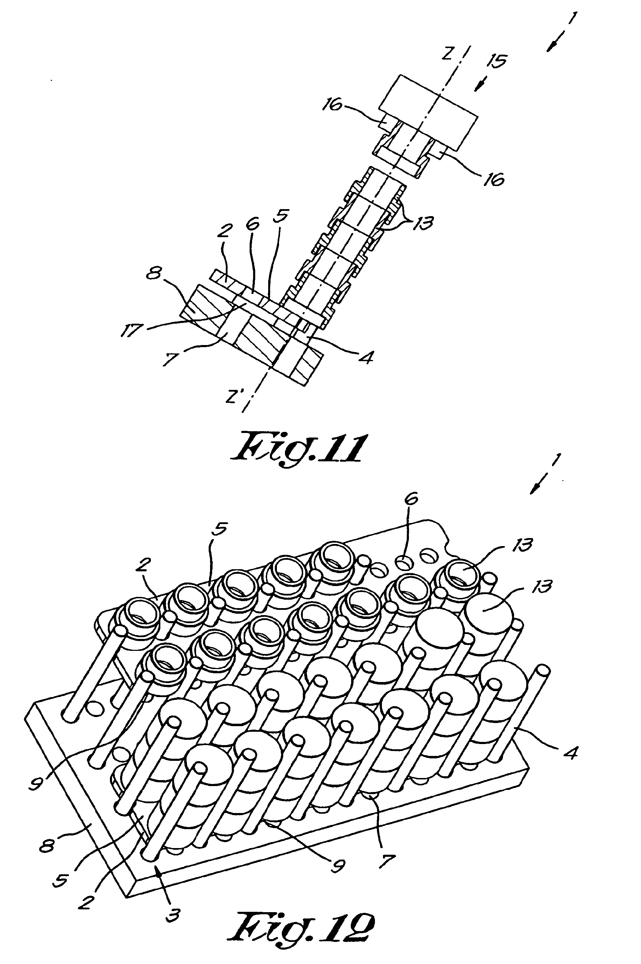

Figures 10 and 11 show that with a magazine 1 with an adjustable length L, workpieces that partly fit into one another when stacked can also be handled, and which can be taken out of the magazine 1 or put in it one by one and layer by layer in the Z-Z' direction by a robot gripper 15.

Figure 12 shows a magazine 1 that simultaneously acts as a magazine 1 for supplying workpieces 13 to undergo a process, and also acts as a magazine 11 in which the workpieces 1 can again be stored after the aforementioned process.

In this case the mutual movement between the table 2 and the holder 8 is equal to the total stack height S divided by the number of layers in the stack.

For workpieces with a more complex shape than those of the round disks described, it can be useful to provide two series of supports that extend in two different directions and for the table 2 to slope down to the first series of supports, and to the second series of supports.

It is clear that the supports 3 are not necessarily formed by pegs 4 that protrude upwards through the holes 6 in the table 2.

It is also clear that if the magazine 1 is equipped for only one layer of workpieces 13, the table 2 can also serve as a holder 8 as in that case no adjustment of the pegs 4 is required.

The present invention is not in any way limited to the embodiments described as an example and shown in the drawings, but a magazine according to the invention can be realised in all kinds of forms and dimensions, without acting outside the scope of the invention, as defined by the claims.

## Claims

1. A magazine for the temporary storage of workpieces (13) for the supply and/or removal of these workpieces (13) from above by a robot, wherein this magazine (1) is primarily formed by, on the one hand, a table (2) for stacking the workpieces (13) according to a desired positioning pattern at a distance from one another, and, on the other hand, by a series of movable stoppers (3) that can be positioned above the table (2) according to a desired positioning pattern, whereby the table (2) slopes downwards at least in the (Y-Y') direction of the aforementioned stoppers (3) against which the workpieces (13) can be placed to support the workpieces (13) in the above mentioned sloping direction (Y-Y') for positioning them and for keeping them in place in known positions at a distance from one another in the sloping direction (Y-Y') depending on the position of the stoppers (3) which can be adjusted according to the shape and dimensions of the workpieces (13) to be handled, and the stoppers (3) are such that the workpieces (13) are automatically aligned to the aforementioned desired positions when moving the workpieces (13) against the stoppers (3) in the sloping direction (Y-Y') of the stoppers (3).

2. A magazine according to claim 1, **characterised in that** the angle of incline (A) of the table (2) is such that the workpieces (13) on the table (2) only slide under the influence of their own weight in the direction of the supports (3).

3. A magazine according to claim 1 or 2, **characterised in that** the table (2) has a pattern of holes and that the supports (3) are formed by pegs (4) that extend through the holes (6) of the hole pattern, whereby these pegs (4) protrude by a length (L) above the table (2) and whereby these pegs (4) are inserted in or left out of the holes (6) according to a chosen positioning pattern with positions with discrete distances between them (ΔX, ΔY) that are chosen according to the shape and dimensions of the workpieces to be held.

4. A magazine according to claim 3, **characterised in that** the aforementioned pattern of holes (6) in the table (2) extends along a line (12) that is perpendicular to the aforementioned direction (Y-Y') of the incline of the table (2) to the supports (3).

5. A magazine according to claims 3 or 4, **characterised in that** the hole pattern is a grid pattern (10) with positions that are located at the nodes (11) of a grid with parallel lines (12) that are perpendicular to the aforementioned direction (Y-Y') of the incline of the table (2) to the supports (3).

6. A magazine according to one of the claims 3 to 5, **characterised in that** the length (L) by which the pegs (4) protrude above the table (2) is adjustable according to the stack height (S) of the workpieces (13).

7. A magazine according to one of the claims 3 to 6, **characterised in that** the length (L) by which the pegs (4) protrude above the table (2) is set such that the length (L) concerned is less than the stack height (S) of the workpieces (13), such that the top workpiece (13) protrudes over a certain height (B) above the pegs (4).

8. A magazine according to one of the claims 3 to 7, **characterised in that** the pegs (4) are perpendicular to the top surface (5) of the table (2).

9. A magazine according to one of the claims 3 to 8, **characterised in that** the diameter (E) of the pegs (4) almost matches the diameter of the holes (6) in the table (2).

10. A magazine according to claims 3 to 9, **characterised in that** the pegs (4) are secured in a holder (8) that is affixed under the table (2) and the pegs (4) can be removed or extended.

11. A magazine according to claim 10, **characterised in that** the holder (8) has notches or holes (7) in which the pegs (4) are detachably secured by their lowest end, whereby the notches or holes (7) are provided according to a pattern that corresponds to the aforementioned hole pattern of the table (2).

12. A magazine according to claim 6 and claim 10 or 11, **characterised in that** the table (2) and the holder (8) are movable with respect to one another in a direction (Z-Z') perpendicular to the top surface (5) of the table (2) and that the length (L) by which the pegs (4) protrude above the table (2) is adjustable due to the distance (F) between the table (2) and the holder (8) being adjustable by means of a drive (17) to move the table (2) and/or the holder (8).

13. A magazine according to claim 12, **characterised in that** the holder (8) is fixed and that the table (2) can be moved by the said drive (17).

14. A magazine according to claim 12 or 13, **characterised in that** the aforementioned drive (17) can be controlled to synchronise the movements of the drive (17) with the movements of the robot.

15. A magazine according to one of the foregoing claims, **characterised in that** it has software to determine the position of the workpieces (13) concerned, on the basis of the shape and dimensions of the workpieces (13) to be stored and the position pattern used and the shape and dimensions of the supports (3), in order to be able to enter this position in the robot control.

16. A magazine according to one of the foregoing claims, **characterised in that** it has two series of supports (3), that extend in two different directions and that the table, slopes down to the first series of supports (3), and to the second series of supports (3).

17. Method for temporary storing workpieces (13) in a magazine for the supply and/or removal of these workpieces (13) from above the magazine by a robot, the method comprises the steps of:
- providing a magazine (1) which is primarily formed by, on the one hand, a table (2) for stacking the workpieces (13) according to a desired positioning pattern at a distance from one another, and, on the other hand, by a series of movable stoppers (3) that can be positioned above the table (2) according to a desired positioning pattern, whereby the table (2) slopes downwards at least in the (Y-Y') direction of the aforementioned stoppers (3);
- positioning the stoppers according to the desired pattern such that they can support the workpieces (13) in the above mentioned sloping direction (Y-Y') for positioning them and for keeping them in place in known positions at a distance from one another in the sloping direction (Y-Y');
- providing the workpieces (13) on the table and moving them in the sloping direction (Y-Y') of the stoppers (3) against the stoppers (3), whereby the stoppers (3) are such that the workpieces (13) are automatically aligned to the aforementioned desired positions when moving them during this step.

## Patentansprüche

1. Magazin zur vorübergehenden Lagerung von Werkstücken (13) zur Zufuhr und/oder Abfuhr dieser Werkstücke (13) von oben durch einen Roboter, wobei dieses Magazin (1) im Wesentlichen einerseits durch einen Tisch (2) zum Stapeln der Werkstücke (13) gemäß einem gewünschten Positionierungsmuster in einem Abstand voneinander, und andererseits durch eine Serie bewegbarer Anschlagstützen (3), die gemäß einem gewünschten Positionierungsmuster über dem Tisch (2) positioniert werden können, gebildet wird, wobei der Tisch (2) mindestens in der (Y-Y')-Richtung der vorgenannten Anschlagstützen (3) ein Abwärtsgefälle aufweist, gegen welche Anschlagstützen die Werkstücke (13) angelegt werden können, um die Werkstücke (13) in der vorgenannten Gefällerichtung (Y-Y') zu stützen, um sie zu positionieren und um sie an bekannten Positionen in einem Abstand voneinander in der Gefällerichtung (Y-Y') an Ort und Stelle zu halten, abhängig von der Position der Anschlagstützen (3), die entsprechend der Form und den Abmessungen der zu hantierenden Werkstücke (13) eingestellt werden kann, und die Anschlagstützen (3) derart sind, dass die Werkstücke (13) automatisch in den vorgenannten gewünschten Positionen ausgerichtet werden, wenn die Werkstücke (13) in der Gefällerichtung (Y-Y') der Anschlagstützen (3) gegen die Anschlagstützen (3) bewegt werden.

2. Magazin nach Anspruch 1, **dadurch gekennzeichnet, dass** der Neigungswinkel (A) des Tisches (2) derart ist, dass die Werkstücke (13) auf dem Tisch (2) nur unter dem Einfluss ihres Eigengewichts in die Richtung der Anschlagstützen (3) gleiten.

3. Magazin nach Anspruch 1 oder 2, **dadurch gekennzeichnet, dass** der Tisch (2) ein Lochmuster aufweist und dass die Anschlagstützen (3) durch Zapfen (4) gebildet werden, die sich durch die Löcher (6) des Lochmusters erstrecken, wobei diese Zapfen (4) mit einer Länge (L) über den Tisch (2) hinausragen und wobei diese Zapfen (4) gemäß einem gewählten Positionierungsmuster in den Löchern (6) angebracht oder daraus weggelassen werden, mit diskreten Zwischenabständen (ΔX, ΔY), die entsprechend der Form und den Abmessungen der zu haltenden Werkstücke gewählt sind.

4. Magazin nach Anspruch 3, **dadurch gekennzeichnet, dass** das vorgenannte Lochmuster (6) in dem Tisch (2) sich entlang einer Linie (12) erstreckt, die senkrecht zu der vorgenannten Richtung (Y-Y') der Neigung des Tisches (2) zu den Anschlagstützen (3) verläuft.

5. Magazin nach Ansprüchen 3 oder 4, **dadurch gekennzeichnet, dass** das Lochmuster ein Gittermuster (10) mit Positionen ist, die sich an den Knotenpunkten (11) eines Gitters mit parallelen Linien (12) befinden, die senkrecht zu der vorgenannten Richtung (Y-Y') der Neigung des Tisches (2) zu den Anschlagstützen (3) hin verlaufen.

6. Magazin nach einem der Ansprüche 3 bis 5, **dadurch gekennzeichnet, dass** die Länge (L), mit der die Zapfen (4) über den Tisch (2) hinausragen, entsprechend der Stapelhöhe (S) der Werkstücke (13) einstellbar ist.

7. Magazin nach einem der Ansprüche 3 bis 6, **dadurch gekennzeichnet, dass** die Länge (L), mit der die Zapfen (4) über den Tisch (2) hinausragen, so eingestellt ist, dass die betreffende Länge (L) kleiner ist als die Stapelhöhe (S) der Werkstücke (13), sodass das oberste Werkstück (13) über eine gewisse Höhe (B) über die Zapfen (4) ragt.

8. Magazin nach einem der Ansprüche 3 bis 7, **dadurch gekennzeichnet, dass** die Zapfen (4) senkrecht zur Oberfläche (5) des Tisches (2) gerichtet sind.

9. Magazin nach einem der Ansprüche 3 bis 8, **dadurch gekennzeichnet, dass** der Durchmesser (E) der Zapfen (4) nahezu mit dem Durchmesser der Löcher (6) in dem Tisch (2) übereinstimmt.

10. Magazin nach einem der Ansprüche 3 bis 9, **dadurch gekennzeichnet, dass** die Zapfen (4) in einer Halterung (8) gesichert sind, die unter dem Tisch (2) angebracht ist, und die Zapfen (4) entfernt oder ausgefahren werden können.

11. Magazin nach Anspruch 10, **dadurch gekennzeichnet, dass** die Halterung (8) Aussparungen oder Löcher (7) aufweist, worin die Zapfen (4) an ihrem unteren Ende herausnehmbar gesichert sind, wobei die Aussparungen oder Löcher (7) gemäß einem Muster vorgesehen sind, das mit dem vorgenannten Lochmuster des Tisches (2) übereinstimmt.

12. Magazin nach Anspruch 6 und Anspruch 10 oder 11, **dadurch gekennzeichnet, dass** der Tisch (2) und die Halterung (8) in Bezug zueinander in einer Richtung (Z-Z') senkrecht zur Oberfläche (5) des Tisches (2) bewegbar sind und dass die Länge (L), mit der die Zapfen (4) über den Tisch (2) hinausragen, dadurch einstellbar ist, dass der Abstand (F) zwischen dem Tisch (2) und der Halterung (8) mittels eines Antriebs (17) zum Bewegen des Tisches (2) und/oder der Halterung (8) einstellbar ist.

13. Magazin nach Anspruch 12, **dadurch gekennzeichnet, dass** die Halterung (8) feststehend ist und dass der Tisch (2) durch besagten Antrieb (17) bewegt werden kann.

14. Magazin nach Anspruch 12 oder 13, **dadurch gekennzeichnet, dass** der vorgenannte Antrieb (17) angesteuert werden kann, um die Bewegungen des Antriebs (17) mit den Bewegungen des Roboters zu synchronisieren.

15. Magazin nach einem der vorhergehenden Ansprüche, **dadurch gekennzeichnet, dass** es Software aufweist, um, auf Basis der Form und Abmessungen der zu lagernden Werkstücke (13) und des verwendeten Positionsmusters und der Form und Abmessungen der Anschlagstützen (3), die Position der betreffenden Werkstücke (13) zu ermitteln, um diese Position in die Robotersteuerung eingeben zu können.

16. Magazin nach einem der vorhergehenden Ansprüche, **dadurch gekennzeichnet, dass** es zwei Serien von Anschlagstützen (3) aufweist, die sich in zwei verschiedenen Richtungen erstrecken, und dass der Tisch sowohl zu der ersten Serie von Anschlagstützen (3) als auch zu der zweiten Serie von Anschlagstützen (3) hin abwärts geneigt ist.

17. Verfahren zur vorübergehenden Lagerung von Werkstücken (13) in einem Magazin zur Zufuhr und/oder Abfuhr dieser Werkstücke (13) von über dem Magazin durch einen Roboter, wobei das Verfahren folgende Schritte aufweist:
- Vorsehen eines Magazins (1), das im Wesentlichen einerseits durch einen Tisch (2) zum Stapeln der Werkstücke (13) gemäß einem gewünschten Positionierungsmuster in einem Abstand voneinander, und andererseits durch eine Serie bewegbarer Anschlagstützen (3), die gemäß einem gewünschten Positionierungsmuster über dem Tisch (2) positioniert werden können, gebildet wird, wobei der Tisch (2) mindestens in der (Y-Y')-Richtung der vorgenannten Anschlagstützen (3) ein Abwärtsgefälle aufweist;
- Positionieren der Anschlagstützen gemäß dem gewünschten Muster, sodass sie die Werkstücke (13) in der vorgenannten Gefällerichtung (Y-Y') stützen können, um sie zu positionieren und um sie an bekannten Positionen in einem Abstand voneinander in der Gefällerichtung (Y-Y') an Ort und Stelle zu halten;
- Vorsehen der Werkstücke (13) auf dem Tisch und Bewegen der Werkstücke in der Gefällerichtung (Y-Y') der Anschlagstützen (3) gegen die Anschlagstützen (3), wobei die Anschlagstützen (3) derart sind, dass die Werkstücke (13) automatisch in den vorgenannten gewünschten Positionen ausgerichtet werden, wenn sie während dieses Schritts bewegt werden.

## Revendications

1. Magasin pour le stockage temporaire de pièces de fabrication (13) pour l'alimentation et/ou le retrait de ces pièces de fabrication (13) à partir du haut par un robot, dans lequel ce magasin (1) est principalement constitué, d'une part, par une table (2) pour empiler les pièces de fabrication (13) conformément à un motif de positionnement désiré, à une certaine distance les unes des autres, et d'autre part, par une série de butées mobiles (3) qui peuvent venir se disposer au-dessus de la table (2) conformément à un motif de positionnement désiré, la table (2) étant inclinée vers le bas au moins dans la direction (Y-Y') des butées susmentionnées (3) contre lesquelles les pièces de fabrication (13) peuvent être placées dans le but de supporter les pièces de fabrication (13) dans la direction d'inclinaison (Y-Y') mentionnée ci-dessus pour leur positionnement et leur maintien en place dans des positions connues à une certaine distance les unes des autres dans la direction d'inclinaison (Y-Y') en fonction de la position des butées (3) qui peut être réglée conformément à la configuration et aux dimensions des pièces de fabrication (13) qui doivent être manipulées, et les butées (3) sont telles que les pièces de fabrication (13) sont alignées de manière automatique par rapport aux positions désirées susmentionnées lors du déplacement des pièces de fabrication (13) jusque contre les butées (3) dans la direction d'inclinaison (Y-Y') des butées (3).

2. Magasin selon la revendication 1, **caractérisé en ce que** l'angle d'inclinaison (A) formé par la table (2) est tel que les pièces
de fabrication (13) sur la table (2) ne glissent que sous l'influence de leur propre poids dans la direction des supports (3).

3. Magasin selon la revendication 1 ou 2, **caractérisé en ce que** la table (2) possède un motif de trous et **en ce que** les supports (3) sont réalisés à l'aide de chevilles (4) qui s'étendent à travers les trous (6) du motif de trous, ces chevilles (4) faisant saillie sur une longueur (L) au-dessus de la table (2) et ces chevilles (4) étant insérées dans les trous (6) ou laissées en dehors des trous (6) en fonction d'un motif de positionnement sélectionné comprenant des positions avec des distances discrètes entre elles (ΔX, ΔY) qui sont choisies en fonction de la configuration et des dimensions des pièces de fabrication qui doivent être maintenues.

4. Magasin selon la revendication 3, **caractérisé en ce que** le motif de trous (6) susmentionné dans la table (2) s'étend le long d'une ligne (12) qui est perpendiculaire à la direction susmentionnée (Y-Y') de l'inclinaison de la table (2) en direction des supports (3).

5. Magasin selon la revendication 3 ou 4, **caractérisé en ce que** le motif de trous est un motif en forme de grille (10) avec des positions qui sont situées aux noeuds (11) d'une grille comprenant des lignes parallèles (12) qui sont perpendiculaires à la direction susmentionnée (Y-Y') de l'inclinaison de la table (2) en direction des supports (3).

6. Magasin selon l'une quelconque des revendications 3 à 5, **caractérisé en ce que** la longueur (L) par laquelle les chevilles (4) font saillie au-dessus de la table (2) peut être réglée en fonction de la hauteur d'empilage (S) des pièces de fabrication (13)

7. Magasin selon l'une quelconque des revendications 3 à 6, **caractérisé en ce que** la longueur (L) par laquelle les chevilles (4) font saillie au-dessus de la table (2) est réglée de manière telle que la longueur (L) en question est inférieure à la hauteur d'empilage (S) des pièces de fabrication (13), si bien que la pièce de fabrication (13) au sommet de la pile fait saillie sur une certaine hauteur (B) au-dessus des chevilles (4).

8. Magasin selon l'une quelconque des revendications 3 à 7, **caractérisé en ce que** les chevilles (4) sont perpendiculaires à la surface supérieure (5) de la table (2).

9. Magasin selon l'une quelconque des revendications 3 à 8, **caractérisé en ce que** le diamètre (E) des chevilles (4) correspond approximativement au diamètre des trous (6) dans la table (2).

10. Magasin selon l'une quelconque des revendications 3 à 9, **caractérisé en ce que** les chevilles (4) sont fixées dans un dispositif de maintien (8) qui est fixé en dessous de la table (2) et les chevilles (4) peuvent être retirées ou prolongées.

11. Magasin selon la revendication 10, **caractérisé en ce que** le dispositif de maintien (8) possède des encoches ou des trous (7) dans lesquels les chevilles (4) sont fixées de manière amovible par leur extrémité la plus basse, les encoches ou les trous (7) étant prévus conformément à un motif qui correspond au motif de trous susmentionné de la table (2).

12. Magasin selon la revendication 6 et la revendication 10 ou 11, **caractérisé en ce que** la table (2) et le dispositif de maintien (8) sont mobiles l'un par rapport à l'autre dans une direction (Z-Z') qui est perpendiculaire à la surface supérieure (5) de la table (2) et **en ce que** la longueur (L) par laquelle les chevilles (4) font saillie au-dessus de la table (2) peut être réglée par le fait que la distance (F) entre la table (2) et le dispositif de maintien (8) peut être réglée au moyen d'un entraînement (17) destiné à déplacer la table (2) et/ou le dispositif de maintien (8).

13. Magasin selon la revendication 12, **caractérisé en ce que** le dispositif de maintien (8) est fixe et **en ce que** la table (2) peut se mouvoir via ledit entraînement (17).

14. Magasin selon la revendication 12 ou 13, **caractérisé en ce que** l'entraînement susmentionné (17) peut être commandé pour synchroniser les mouvements de l'entraînement (17) avec les mouvements du robot.

15. Magasin selon l'une quelconque des revendications précédentes, **caractérisé en ce qu'**il possède un logiciel pour déterminer la position des pièces de fabrication concernées (13) sur base de la configuration et des dimensions des pièces de fabrication (13) qui doivent être stockées et sur base du motif de position utilisé et de la configuration et des dimensions des supports (3), pour pouvoir entrer cette position dans la commande du robot.

16. Magasin selon l'une quelconque des revendications précédentes, **caractérisé en ce qu'**il possède deux séries de supports (3) qui s'étendent dans deux directions différentes et **en ce que** la table présente une inclinaison descendante en direction de la première série de supports (3) et en direction de la deuxième série de supports (3).

17. Procédé pour le stockage temporaire de pièces de fabrication (13) dans un magasin pour l'alimentation et/ou le retrait de ces pièces de fabrication (13) par le haut du magasin par un robot, le procédé comprenant les étapes consistant à :
- procurer un magasin (1) qui est principalement constitué, d'une part, par une table (2) pour empiler les pièces de fabrication (13) conformément à un motif de positionnement désiré, à une certaine distance les unes des autres, et d'autre part, par une série de butées mobiles (3) qui peuvent venir se disposer au-dessus de la table (2) conformément à un motif de positionnement désiré, la table (2) étant inclinée vers le bas au moins dans la direction (Y-Y') des butées susmentionnées (3) ;
- positionner les butées conformément au motif désiré de manière telle qu'elles puissent supporter les pièces de fabrication (13) dans la direction d'inclinaison mentionnée (Y-Y') afin de les positionner et de les maintenir en place dans des positions connues à une certaine distance les unes des autres dans la direction d'inclinaison (Y-Y') ;
- procurer les pièces de fabrication (13) sur la table et les déplacer dans la direction d'inclinaison (Y-Y') des butées (3) jusque contre les butées (3), les butées (3) étant telles que les pièces de fabrication (13) sont alignées de manière automatique par rapport aux positions désirées susmentionnées lors de leur déplacement en cours de cette étape.
